# FASCICULE DE BREVET EUROPEEN

(11) **EP 2 186 390 B1**
(45) Date de publication et mention de la délivrance du brevet: **22.02.2017**
(21) Numéro de dépôt: 09175127.1
(22) Date de dépôt: 05.11.2009
(51) Int. Cl.: A01C 5/06, A01C 7/04

(54) **Semoir**
Sämaschine
Seeder

(30) Priorité: 12.11.2008 FR 0857645
(43) Date de publication de la demande: 19.05.2010
(73) Titulaire: KUHN S.A., 67700 Saverne (FR)
(72) Inventeur: Fritsch, Michel, 67350 Grassendorf (FR); Viriat, Laurent, 67440 Westhouse-Marmoutier (FR)

(56) Documents cités:
- WO-A-2007/050185
- US-A- 4 596 199
- US-A- 5 022 333
- US-A1- 2004 139 895
- US-B1- 7 322 302

## Description

La présente invention se rapporte au domaine technique général des machines agricoles du type semoirs ou tout type de machines munies d'un dispositif pour semer. L'invention concerne plus particulièrement un semoir avec un châssis s'appuyant au sol au moyen de roues, ledit châssis portant des éléments d'implantation de graines dans le sol, lesdites roues étant placées dans la zone de travail d'un élément d'implantation extérieur.

Lors de l'utilisation des machines de ce type dans un champ, les roues laissent des traces sur la surface du sol. Ce semoir étant amené à se déplacer et à travailler sur un champ préalablement travaillé. Ces traces résultent d'un écrasement et d'un tassement de la terre sous l'effet du poids de la machine lors de son déplacement. Après le passage des roues, le relief du terrain est inégal. En effet lorsque la roue roule sur le sol, une partie de la terre est écrasée et tassée sous la roue alors qu'une autre partie est poussée de part et d'autre de la roue. On observe ainsi un creux correspondant à la zone tassée par la roue et de part et d'autre de la zone tassée, un bourrelet de terre. Lorsque les roues sont placées dans la zone de travail d'un élément d'implantation extérieur, les graines déposées ne bénéficient pas d'un lit de semence favorable à la germination car elles sont déposées dans une terre tassée.

Il est notamment connu d'utiliser des dents qui sont destinées à émietter la zone tassée par les roues. Pour ameublir ces traces de roue, il est connu d'utiliser une dent qui est disposée au centre de la zone. Cette dent produit de la terre fine au niveau de la trace mais elle n'agit pas au-delà. Le degré d'émiettement va dépendre de la consistance du sol (friable, dur ou semi-plastique) et de la vitesse d'avance. Pour créer suffisamment de terre fine, cette dent doit travailler à une profondeur plus importante que la profondeur de travail des éléments d'implantation. Cette dent crée donc un effort résistant supplémentaire à l'avance de la machine. Selon la largeur de la zone tassée par la roue, on utilisera une ou plusieurs dents. Ces dents travaillant toujours à l'intérieur de la zone tassée. Par ailleurs, la surface du champ conserve un relief inégal lié à la présence du bourrelet de terre poussée vers l'extérieur par la roue.

Le document US 2004/139895 A1 décrit un dispositif de fermeture de sillon pour recouvrir les graines adapté à un semoir effectuant du semis direct. Le disque incliné est positionné de manière à recouvrir les graines dans le sillon, il s'étend donc dans le prolongement du disque ouvreur et de la roue de jauge correspondante.

La présente invention a pour but de remédier aux différents inconvénients de l'état de la technique. Elle doit notamment proposer un moyen simple permettant de produire un lit de semence favorable à la germination des graines déposées dans la trace de roue d'un semoir. L'invention doit également permettre d'effacer le relief de surface laissé par le passage de la machine.

A cet effet, l'invention consiste en ce que le semoir comporte un disque incliné par rapport à la verticale et libre en rotation dans une position oblique par rapport à la direction d'avance au travail et que ledit disque est disposé au moins sensiblement derrière une desdites roues par rapport à la direction d'avance de manière à ce qu'il s'étende au moins partiellement au-delà de ladite roue correspondante et s'étend entre un élément d'implantation extérieur et une roue correspondante, d'après une vue de côté.

Grâce à la position originale du disque par rapport à la roue, la terre accumulée au bord de la trace est renvoyée dans la trace pour fournir un environnement favorable à la germination des graines.

D'autres caractéristiques et avantages de l'invention se dégageront de la description qui va suivre des exemples de réalisation non limitatifs de l'invention avec référence aux dessins annexés dans lesquels :
- la **figure 1** représente une vue latérale d'une machine selon l'invention liée à un tracteur,
- la **figure 2** représente une vue arrière de la machine de la figure 1,
- la **figure 3** représente une vue de dessus d'une partie de la machine de la figure 1,
- la **figure 4** est une représentation simplifiée de la figure 3.

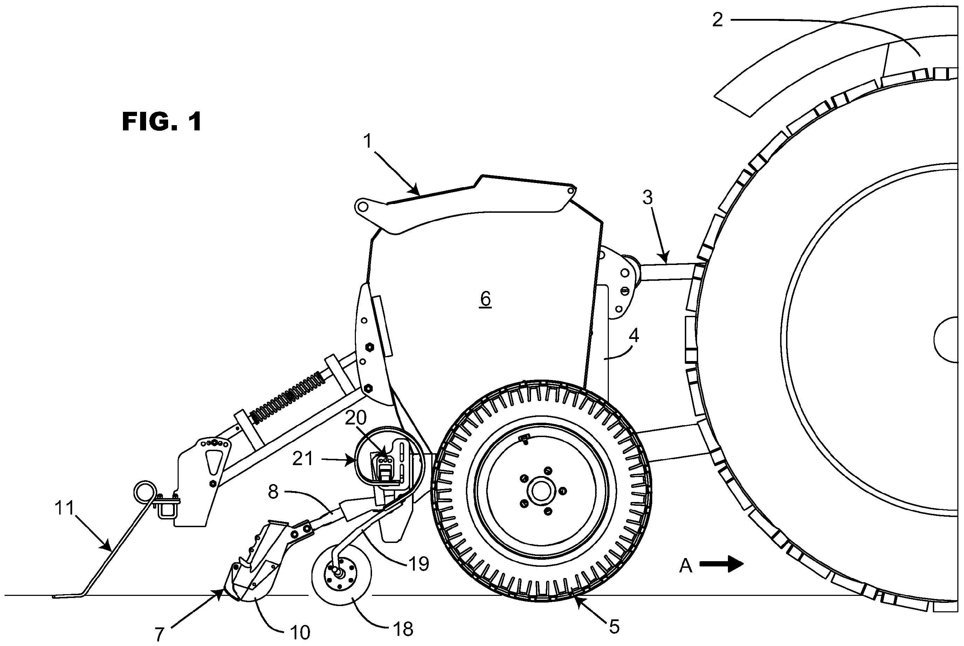

Telle qu'elle est représentée sur la figure 1, la machine agricole est un semoir (1) du type semoir en lignes. Il est destiné à être lié directement à un tracteur (2) par l'intermédiaire d'un dispositif d'attelage trois points (3) ou indirectement via une machine de travail du sol. Le semoir est ainsi déplacé suivant une direction et un sens d'avance indiqué par la flèche (A) lors du travail. Dans la suite de la description, les notions "avant" et "arrière" sont définies par rapport au sens d'avance (A) et les notions "droite" et "gauche" sont définies en regardant ledit semoir de l'arrière dans le sens d'avance (A).

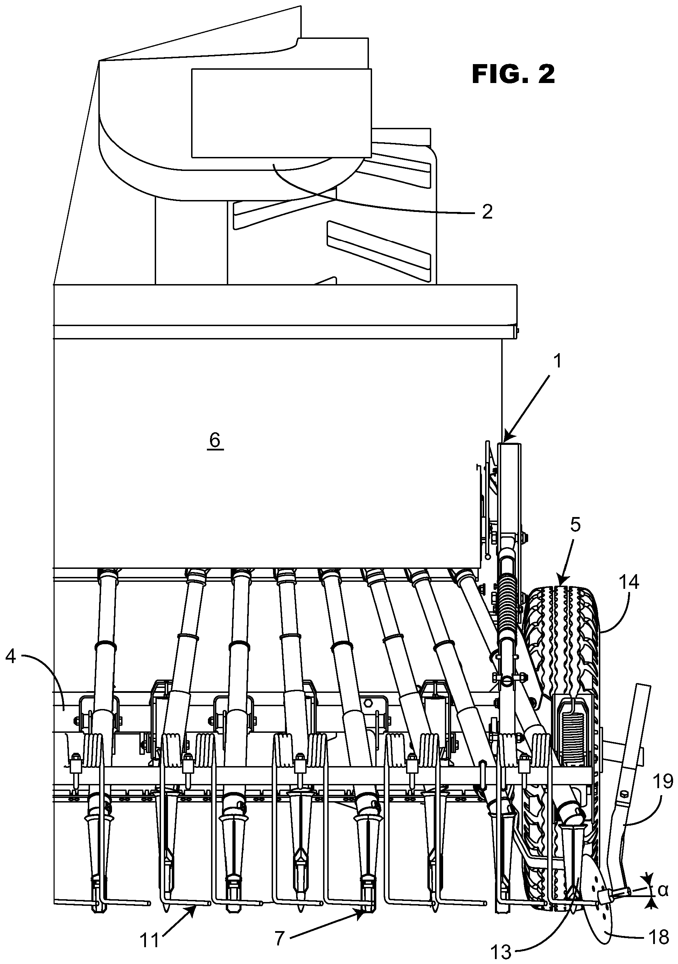

La figure 2 représente une partie du semoir (1) selon une vue arrière. Un semoir (1) permet un semis régulier en lignes équidistantes à profondeur uniforme. Ce semoir (1) comporte à cet effet un châssis (4) s'appuyant au sol par l'intermédiaire d'au moins une roue (5), une trémie (6) et des éléments d'implantation (7) de graines dans le sol. La trémie (6) est fixée sur le châssis (4) et est destinée à contenir des graines. Les graines contenues dans la trémie (6) sont introduites dans le sol par l'intermédiaire des éléments d'implantation (7). L'entraînement de la distribution pour les graines est réalisé par l'intermédiaire des roues (5) qui roulent au sol. Les éléments d'implantation (7) sont régulièrement répartis sur toute la largeur du châssis (4). Ils sont disposés à l'arrière du châssis (4) sur une ou plusieurs rangées compte tenu de la direction d'avance (A). Ils ouvrent des sillons de profondeur déterminée dans lesquels les graines sont placées puis recouvertes. Chaque élément d'implantation (7) présente un bras de liaison (8) relié au châssis (4) via une articulation (9) d'axe longitudinal sensiblement horizontal et orthogonal à la direction d'avance (A). A l'extrémité arrière du bras de liaison (8) est fixé un soc (10) qui dépose la graine dans le sol. Ainsi le soc (10) peut pivoter autour de l'articulation longitudinale (9) pour suivre les inégalités du sol et implanter les graines dans le sol à une profondeur sensiblement constante. De manière alternative, le soc (10) est remplacé par au moins un disque.

Le semoir (1) est encore équipé d'un dispositif de recouvrement (11) disposé derrière les éléments d'implantation (7) compte tenu de la direction d'avance (A). Le dispositif de recouvrement (11) permet d'effacer les sillons créés par les éléments d'implantation (7) et de ramener de la terre fine et des petites mottes sur les graines déposées dans la ligne de semis. Pour cela, il provoque un déplacement latéral et superficiel de la terre pour égaliser la surface du sol au moyen d'outils tels que des dents coudées. Le dispositif de recouvrement (11) a pour fonction d'égaliser la surface du sol et éventuellement les inégalités qui sont engendrées par les éléments d'implantation (7). Le réglage de ce dispositif de recouvrement (11) est important car il ne doit pas perturber le placement des graines dans la ligne de semis.

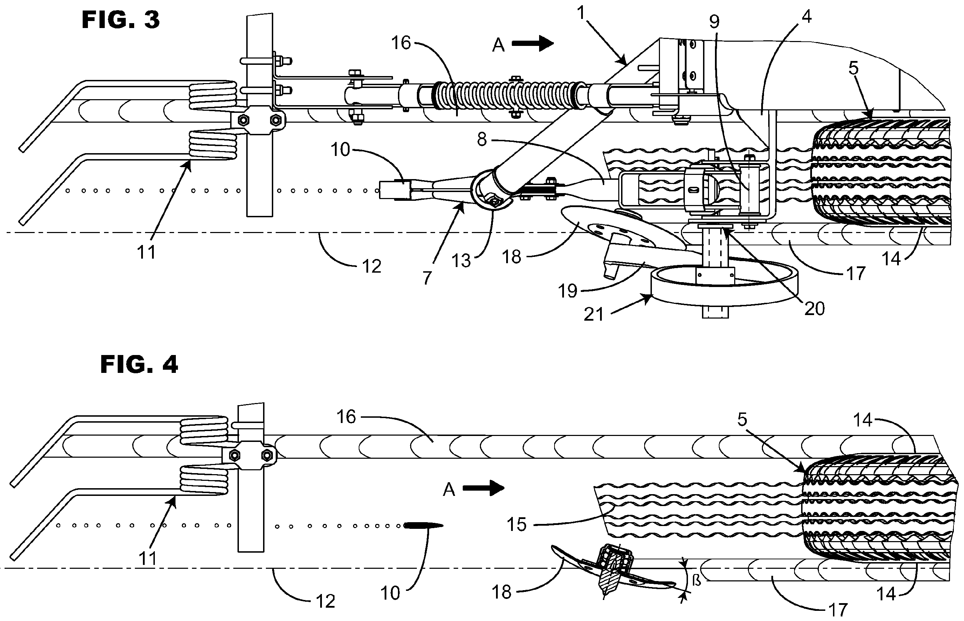

La figure 3 représente la partie droite du semoir (1) avec la roue (5), un élément d'implantation extérieur (13) et une partie du dispositif de recouvrement (11) selon une vue de dessus. Le repère (12) matérialise la limite extérieure de travail du semoir (1). On remarque que la roue (5), l'élément d'implantation extérieur (13) et le dispositif de recouvrement (11) sont disposés au voisinage de la limite extérieure (12) mais ne s'étendent pas en dehors de cette limite. Pour un meilleur placement des éléments d'implantation (7) à l'arrière du châssis (4), les roues sont disposées de part et d'autre du châssis (4) au plus près des limites extérieures (12) du semoir (1). C'est ainsi, que les roues (5) sont placées dans la zone de travail des éléments d'implantation extérieur (13). Ces éléments extérieurs (13) doivent donc travailler dans le sillage des roues (5). Une telle roue (5) est constituée d'un pneu monté sur une jante. Le pneu comportant une bande de roulement et au moins un flanc (14).

Les roues (5) sont amenées à rouler sur un lit de semence préparé, la bande de roulement du pneu a tendance à écraser et tasser une partie de la terre et, à pousser l'autre partie de part et d'autre de la roue (5). Les roues (5) laissent donc une trace (15) dans le sol. Cette trace (15) est plus ou moins profonde selon le type de sol et selon la charge supportée par les roues (5). Cette charge varie notamment selon la quantité de graines que contient la trémie (6). La terre poussée de part et d'autre de la trace (15) est appelée bourrelet (16, 17). Un bourrelet est formé de terre émiettée, constituée d'un mélange de petites mottes et de terre fine. Les graines qui sont déposées par l'élément extérieur (13) sont donc uniquement en contact avec de la terre tassée. Elles ne bénéficient donc pas d'un environnement favorable à la germination. La levée des graines dans le champ ne sera pas homogène et cette différence de maturité se répercutera jusqu'à la récolte. La préparation du lit de semences est une étape préalable au semis. Cette étape peut être réalisée simultanément au semis lorsqu'un semoir est attelé derrière une machine de travail du sol ou alors de manière indépendante. Dans les deux cas, le semoir (1) est amené à se déplacer sur un sol préparé c'est-à-dire que la surface du sol est émiettée et nivelée.

Selon l'invention, le semoir (1) comporte un disque (18) incliné par rapport à la verticale et libre en rotation dans une position oblique par rapport à la direction d'avance (A) au travail et que ledit disque (18) est disposé au moins sensiblement derrière une desdites roues (5) de manière à ce qu'il s'étende au moins partiellement au-delà de ladite roue (5) correspondante et s'étend entre un élément d'implantation extérieur (13) et une roue (5) correspondante, d'après une vue de côté. Grâce à ce disque (18), la terre accumulée au bord de la trace (15) est renvoyée dans la trace (15). Avec ce retour de terre fine dans la trace (15), les graines déposées derrière les roues (5) retrouvent un environnement favorable à la germination des graines. Le disque (18) de l'invention est destiné à agir derrière une roue (5) portant le châssis et la trémie. Il s'étend avantageusement entre les roues (5) et les éléments d'implantation (7), compte tenu de la direction d'avance (A) au travail. Il agit donc directement après la formation de la trace (15) et juste avant la dépose des graines par l'élément extérieur (13).

Dans l'exemple de réalisation illustré par les figures 2 à 4, l'axe de rotation du disque (18) présente une orientation particulière qui lui donne une orientation optimale pour ramener la terre. Le disque (18) est libre en rotation et nécessite une force de traction faible puisqu'il roule sur le sol. Chaque disque (18) est incliné par rapport à la verticale et est monté libre en rotation dans une position oblique par rapport à la direction d'avance (A) au travail. Le disque (18) est agencé de telle manière qu'il forme un angle (α) par rapport à un plan vertical contenant la direction d'avance (A). L'angle (α) est compris entre 10° et 15° (fig. 2). Le disque (18) s'étend de préférence dans un plan oblique, orienté angulairement par rapport à un plan fictif vertical contenant la direction d'avance (A). L'orientation angulaire présente avantageusement une composante horizontale, perpendiculaire à la direction d'avance et représentant une inclinaison suivant un angle (β) compris entre 15° et 20° (fig. 4). Le disque (18) présente donc un angle prédéterminé dans le plan horizontal ainsi que dans le plan vertical lui permettant de renvoyer la terre du bourrelet (16, 17) dans la trace (15). Pour un meilleur travail, le disque (18) est bombé et de manière préférentielle il présente une forme concave. La figure 4 est une représentation simplifiée de la figure 3. Sur cette figure, le disque (18) ainsi que le soc (10) ont été coupés selon un plan horizontal.

A la lumière des figures 2 à 4, un seul disque (18) s'étend derrière la roue (5). Ce disque (18) est disposé de manière à renvoyer la terre du bourrelet extérieur (17) dans la trace (15) de la roue (5). Le disque (18) s'étend entre la roue (5) et l'élément extérieur (13). Il est monté rotatif sur un bras (19) respectif. Le bras (19) est avantageusement suspendu directement ou indirectement au châssis (4) du semoir (1). La position du disque (18) ainsi que sa pression au sol est adaptable au moyen d'un dispositif de réglage (20). Ainsi, la position du disque (18) peut être adaptée en fonction du type de sol, en fonction des conditions de travail et de la largeur de la roue (5) du semoir (1). Le disque (18) peut ainsi être positionné de façon optimale par rapport aux dimensions du bourrelet (16, 17). Le dispositif de réglage (20) permet un réglage en hauteur pour adapter la profondeur de travail du disque (18). Il permet également un réglage angulaire du bras (19) par rapport au châssis (4). Le dispositif de réglage (20) intègre également un réglage latéral pour le disque (18) par rapport à la largeur du bourrelet (16, 17). D'une manière avantageuse, il est prévu de pouvoir échanger les disques (18) pour pouvoir adapter le diamètre à la dimension du bourrelet (16, 17) et améliorer le travail du disque (18).

Le bourrelet intérieur (16) et le bourrelet extérieur (17) sont représentés schématiquement sur les figures 3 et 4. Dans cet exemple de réalisation, le disque (18) est destiné à renvoyer la terre du bourrelet extérieur (17) dans la trace (15). Pour cela, le disque (18) est disposé à l'arrière de la roue (5), et de telle manière qu'une partie du disque (18) s'étend au-delà du flanc (14) de ladite roue (5). La position du disque (18) est réglée de manière à ce que toute la terre du bourrelet (17) puisse être renvoyée dans la trace (15). De manière préférentielle, le bras (19) s'étend au moins sensiblement en dehors du gabarit du semoir (1), au-delà de la limite extérieure (12). En s'étendant au-delà des limites (12), il n'est pas possible de circuler sur les routes avec ce semoir (1). Ainsi pour le transport sur route, il faut préalablement démonter les bras (19) de chaque côté du semoir (1). Selon une alternative, les bras (19) sont liés au châssis (4) de façon à pouvoir être repliés et à être intégrés dans le gabarit du semoir (1).

Chaque bras (19) comporte encore un dispositif de sécurité (21) permettant audit disque (18) de pouvoir s'effacer lors du passage d'un obstacle. Dans l'exemple de réalisation, le bras (19) est formé par un ressort à lame autorisant un pivotement du disque (18) autour d'un axe sensiblement horizontal et sensiblement perpendiculaire à la direction d'avance (A). La disposition du bras (19) au-delà de la limite extérieure (12) permet au disque (18) d'éviter un obstacle en s'effaçant sans être limité en hauteur par l'élément d'implantation extérieur (13). Dans un autre exemple de réalisation non représenté, le bras (19) est rigide et est monté sur le châssis (4) via une articulation élastique comportant des éléments en caoutchouc.

Dans un exemple de réalisation non représenté, un disque (18) selon l'invention est disposé de chaque côté de la roue (5) de manière à pouvoir renvoyer dans la trace (15), la terre du bourrelet intérieur (16) et celle du bourrelet extérieur (17). Grâce à ces deux disques (18), les graines déposées dans la trace (15) retrouvent un lit de semence avec de la terre fine.

Dans l'exemple de réalisation des figures 2 à 4, la terre du bourrelet extérieur (17) est ramenée vers la trace (15) au moyen du disque (18). Par contre en raison de la place limitée du côté du bourrelet intérieur (16), il n'est pas possible d'y insérer un disque (18) selon l'invention, dans cet exemple de réalisation. En effet, l'espace est limité par les éléments d'implantation (7). Etant donné que le bourrelet intérieur (16) s'étend dans la zone de travail du dispositif de recouvrement (11), ses outils vont effectuer le déplacement de la terre et le nivellement du bourrelet intérieur (16). L'orientation des dents coudées permet avantageusement un déplacement de la terre vers la trace (15) et donc vers la ligne de semis. Après l'action du disque (18) et celle du dispositif de recouvrement (11), le relief de surface du lit de semence est effacé rétablissant une surface nivelée et les graines placées dans les traces (15) de roues (5) bénéficient d'un environnement favorable pour leur développement.

Il est bien évident que l'invention n'est pas limitée aux modes de réalisations décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) avec un châssis (4) s'appuyant au sol au moyen de roues (5), ledit châssis (4) portant des éléments d'implantation (7) de graines dans le sol, lesdites roues (5) étant placées dans la zone de travail d'un élément d'implantation extérieur (13), le semoir comportant un disque (18) incliné par rapport à la verticale et libre en rotation dans une position oblique par rapport à la direction d'avance (A) au travail, ledit disque (18) étant disposé au moins sensiblement derrière une desdites roues (5) par rapport à la direction d'avance (A) de manière à ce qu'il s'étende au moins partiellement au-delà de ladite roue (5) correspondante pour renvoyer la terre accumulée au bord d'une trace (15) de la roue (5) dans la trace (15), ***caractérisé en ce que*** ledit disque (18) s'étend entre un élément d'implantation extérieur (13) et ladite roue (5) correspondante, d'après une vue de côté.

2. Semoir selon la revendication 1, ***caractérisé en ce* que** lesdites roues s'étendent dans le gabarit dudit semoir (1) délimité par les limites extérieures (12) et ledit disque (18) est disposé de façon à ce qu'au moins une partie s'étende au-delà d'une des limites extérieures (12).

3. Semoir selon l'une quelconque des revendications 1 à 2, ***caractérisé en ce* que** ledit disque (18) est disposé de façon à ce qu'au moins une partie s'étende au-delà du flanc (14) de ladite roue (5) correspondante de façon à ce qu'il renvoie la terre du bourrelet extérieur (17) dans la trace (15) laissée par ladite roue (5).

4. Semoir selon l'une quelconque des revendications 1 à 3, ***caractérisé en ce* que** la position et la pression au sol dudit disque (18) est adaptable au moyen d'un dispositif de réglage (20).

5. Semoir selon l'une quelconque des revendications 1 à 4, ***caractérisé en ce* que** ledit disque (18) est monté rotatif sur un bras (19) respectif, ledit bras (19) étant suspendu directement ou indirectement audit châssis (4) dudit semoir (1).

6. Semoir selon l'une quelconque des revendications 1 à 5, ***caractérisé en ce* que** chaque bras (19) comporte un dispositif de sécurité (21) permettant audit disque (18) d'éviter un obstacle.

7. Semoir selon la revendication 5 ou 6, ***caractérisé en ce* que** ledit bras (19) respectif s'étend sensiblement au moins au-delà de ladite roue (5).

8. Semoir selon l'une quelconque des revendications 1 à 7, ***caractérisé en ce* qu'**au moins un desdits disques (18) est bombé.

9. Semoir selon l'une quelconque des revendications 1 à 8, ***caractérisé en ce* que** deux disques (18) peuvent être disposés derrière chacune des roues (5) dudit semoir (1).

## Patentansprüche

1. Sämaschine (1) mit einem Rahmen (4), der sich mittels Räder (5) auf dem Boden abstützt, wobei der Rahmen (4) Elemente (7) zur Einbringung von Saat in den Boden trägt, wobei die Räder (5) in dem Arbeitsbereich eines äusseren Einbringungelementes (13) angeordnet sind, wobei die Sämaschine eine zur Vertikale geneigte Scheibe (18) aufweist, die frei in einer zur Arbeitsvorschubrichtung (A) schrägen Stellung drehen kann, wobei die Scheibe (18) mindestens im Wesentlichen hinter einem der Räder (5) bezüglich der Vorschubrichtung (A) derart angeordnet ist, dass sie sich mindestens teilweise über das entsprechende Rad (5) hinaus erstreckt, um die am Rand einer Spur (15) des Rades (5) angehäufte Erde zurück in die Spur (15) zu werfen, ***dadurch gekennzeichnet,* dass** die Scheibe (18) sich gemäss einer Seitenansicht zwischen einem äusseren Einbringungelement (13) und dem entsprechenden Rad (5) erstreckt.

2. Sämaschine nach Anspruch 1, ***dadurch gekennzeichnet,* dass** die Räder sich in der Spurweite der Sämaschine (1) erstrecken, die durch die äussere Rände (12) begrenzt ist und dass die Scheibe (18) derart angeordnet ist, dass sich mindestens ein Teil davon über einen der äusseren Rände (12) hinaus erstreckt.

3. Sämaschine nach irgend einem der Ansprüche 1 bis 2, ***dadurch gekennzeichnet,* dass** die Scheibe (18) derart angeordnet ist, dass sich mindestens ein Teil davon über die Seitenwand (14) des entsprechenden Rads (5) hinaus erstreckt, sodass sie die Erde des äusseren Wulstes (17) in die durch das Rad (5) verursachte Spur (15) zurückwerft.

4. Sämaschine nach irgend einem der Ansprüche 1 bis 3, ***dadurch gekennzeichnet,* dass** die Stellung und der Bodendruck der Scheibe (18) mittels einer Einstellvorrichtung (20) einstellbar sind.

5. Sämaschine narch irgend einem der Ansprüche 1 bis 4, ***dadurch gekennzeichnet,* dass** die Scheibe (18) drehbar an einem entsprechenden Arm (19) angebracht ist, wobei der Arm (19) direkt oder indirekt an dem Rahmen (4) der Sämaschine (1) aufgehängt ist.

6. Sämaschine nach irgend einem der Ansprüche 1 bis 5, ***dadurch gekennzeichnet,* dass** jeder Arm (19) eine Sicherheitsvorrichtung (21) umfasst, die es der Scheiben (18) gestattet, einem Hindernis zu entweichen.

7. Sämaschine nach Anspruch 5 oder 6, ***dadurch gekennzeichnet,* dass** der entsprechende Arm (19) sich mindestens im Wesentlichen über das Rad (5) hinaus erstreckt.

8. Sämaschine nach irgend einem der Ansprüche 1 bis 7, ***dadurch gekennzeichnet,* dass** mindestens eine der Scheiben (18) gewölbt ist.

9. Sämaschine nach irgend einem der Ansprüche 1 bis 8, ***dadurch gekennzeichnet,* dass** zwei Scheiben (18) hinter jedem der Räder (5) der Sämaschine (1) angebracht werden können.

## Claims

1. Seeder (1) comprising a chassis (4) resting on the ground by means of wheels (5), the said chassis (4) carrying elements (7) for planting seeds in the soil, the said wheels (5) being arranged in the work space of an outer planting element (13), the seeder comprising a disc (18) tilted with regard to the vertical and free to revolve in an oblique position relative to the direction of advance (A) during work, the said disc (18) being arranged at least substantially behind one of the said wheels (5) relative to the direction of advance (A) so that it extends at least partly beyond the said corresponding wheel (5) to return the earth piled up at the edge of a track (15) from the wheel (5) inside the track (15), ***characterized in* that** the said disc (18) extends between an outer planting element (13) and the said corresponding wheel (5), according to a side view.

2. Seeder according to Claim 1, ***characterized in* that** the said wheels extend within the working width of the said seeder (1) delimited by the outer limits (12) and the said disc (18) is arranged so that at least one part extends beyond one of the outer limits (12).

3. Seeder according to any one of Claims 1 to 2, ***characterized in* that** the said disc (18) is arranged so that at least one part extends beyond the side face (14) of the said corresponding wheel (5) in order that it returns the earth from the outer ridge (17) inside the track (15) left by the said wheel (5).

4. Seeder according to any one of Claims 1 to 3, ***characterized in* that** the position and the pressure on the ground of the said disc (18) can be adjusted by means of an adjustment device (20).

5. Seeder according to any one of Claims 1 to 4, ***characterized in* that** the said disc (18) is rotatable mounted on a respective arm (19), the said arm (19) being directly or indirectly hung up to the said chassis (4) of the said seeder (1).

6. Seeder according to any one of Claims 1 to 5, ***characterized in* that** each arm (19) comprises a safety device (21) allowing the said disc (18) to avoid an obstacle.

7. Seeder according to Claim 5 or 6, ***characterized in* that** the said respective arm (19) extends substantially at least beyond the said wheel (5).

8. Seeder according to any one of Claims 1 to 7, ***characterized in* that** at least one of the said discs (18) is curved.

9. Seeder according to any one of Claims 1 to 8, ***characterized in* that** two discs (18) can be arranged behind each wheel (5) of the said seeder (1).
